**Europäisches Patentamt**

(19) **European Patent Office**

**Office européen des brevets**

(11) Veröffentlichungsnummer: **0 260 451**
**B1**

(12) **EUROPÄISCHE PATENTSCHRIFT**

(45) Veröffentlichungstag der Patentschrift:
27.12.90

(51) Int. Cl.⁵: **B60K 23/04**

(21) Anmeldenummer: 87111883.2

(22) Anmeldetag: 17.08.87

(54) **Schlupfgeregelte Bremsanlage für Strassenfahrzeuge mit Allradantrieb.**

(30) Priorität: 13.09.86 DE 3631280

(43) Veröffentlichungstag der Anmeldung:
23.03.88 Patentblatt 88/12

(45) Bekanntmachung des Hinweises auf die Patenterteilung:
27.12.90 Patentblatt 90/52

(84) Benannte Vertragsstaaten:
AT CH DE FR IT LI SE

(56) Entgegenhaltungen:
DE-A- 3 342 574
DE-A- 3 418 520
DE-A- 3 430 982
US-A- 4 538 700

(73) Patentinhaber: **ROBERT BOSCH GMBH, Postfach 50,
D-7000 Stuttgart 1(DE)**

(72) Erfinder: **Ebner, Gerd, Dipl.-Ing.(FH),
Mühlwiesenstrasse 17, D-7141 Möglingen(DE)**
Erfinder: **Emig, Reiner, Ing., Geislinger Weg 27,
D-7141 Tamm(DE)**
Erfinder: **Goebels, Hermann-Josef, Ing,, Alte Vaihinger
Strasse 23, D-7141 Schwieberdingen(DE)**

## Beschreibung

### Stand der Technik

Die Erfindung bezieht sich auf eine schlupfgeregelte Bremsanlage für Straßenfahrzeuge mit Allradantrieb nach der Gattung des Hauptanspruchs. Eine derartige Bremsanlage ist bekannt (DE-OS 34 18 520).

Bei dieser bekannten Bremsanlage wird bei Regelbeginn im elektronischen Blockierschutz-Steuergerät ein elektrisches Steuersignal erzeugt, das über eine elektrisches Relais ein Magnetventil betätigt, das die Sperrwirkung des Differentials elektropneumatisch aufhebt.

Das Problem einer solchen Bremsanlage ist aber nicht die Abschaltung der Differentialsperren, sondern die Wiederzuschaltung derselben. Werden nämlich die Differentialsperren nach Beendigung des blockiergeregelten Bremsvorganges einfach wieder eingelegt, so kann es zu einer totalen Zerstörung des Getriebes und des Antriebsstranges kommenm

Es ist beispielsweise möglich, daß der geregelte Bremsvorgang auch bereits während der Fahrt zu Ende geht, indem der Fahrer gewollt die Bremspedalbetätigung aufhebt. Wird dann gleichzeitig auch wieder das Gaspedal betätigt, so erfolgt die Zuschaltung nicht nur unter Last, sondern, insbesondere bei schlüpferiger Fahrbahn, auch bei eventuell unterschiedlichen Raddrehzahlen, so daß der Fahrzeugantrieb beschädigt werden kann.

Im letzten Abschnitt der bereits genannten DE-OS 34 18 520 wird erwähnt, daß die Zuschaltung fahrerabhängig oder auch durch eine Automatik bei erneutem Kuppeln vorzunehmen. Eine solche fahrerabhängige Wiederzuschaltung ist praktisch jedoch nur bei stehendem Fahrzeug möglich. Die Zuschaltung von klauenbetätigten Sperrdifferentialen ist während der Fahrt ohne Risiko nicht möglich.

### Vorteile der Erfindung

Die eingangs genannten schlupfgeregelte Bremsanlage mit den kennzeichnenden Merkmalen des Hauptanspruchs hat demgegenüber den Vorteil, daß eine automatische Wiederzuschaltung der Differentialsperren auch während der Fahrt möglich ist, ohne daß Getriebe oder Antriebsstrang Schaden nimmt. Desweiteren ist es von Vorteil, daß diese Schaltsicherheit mit einfachen Mitteln erreichbar ist.

Schließlich ist es auch vorteilhaft, daß die erfindungsgemäße Bremsanlage ausgehend vom Stand der Technik lediglich eine oder zwei zusätzliche Leitungsverbindungen benötigt.

### Zeichnung

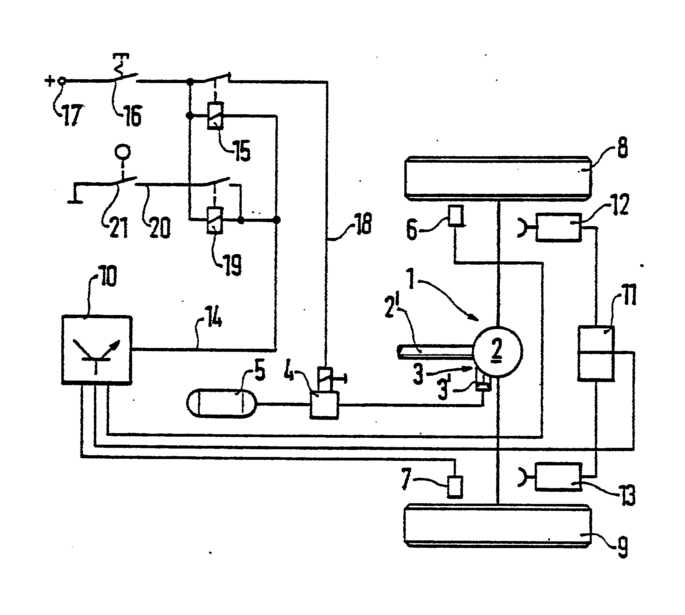

Ein Ausführungsbeispiel der Erfindung ist in der Zeichnung dargestellt und in der nachfolgenden Beschreibung näher erläutert.

### Beschreibung des Ausführungsbeispiels

Ein Fahrzeug hat für seine beiden Achsen einen gemeinsamen Antrieb durch eine Brennkraftmaschine. Das Fahrzeug ist also ein sogenanntes Allradfahrzeug. Jede Achse 1 ist über ein Differential 2 an die Brennkraftmaschine angeschlossen, und an jedem Differential 2 ist eine Sperre 3 vorgesehen, die einen über Druckluft betätigbaren Kolben 3', einen Vorratsbehälter 5 sowie ein Magnetventil 4 zum Ein- und Ausschalten der Differentialsperre aufweist. Die Differentialsperre besteht also im wesentlichen aus den Teilen 3 und 4.

Die Achse 1 hat zwei Räder 8 und 9, deren Drehverhalten von je einem Sensor 6 und 7 abgetastet wird. Die Sensoren 6 und 7 sind an ein zentrales elektronisches Blockierschutz-Steuergerät 10 angeschlossen, das Verbindung mit einem Blockierschutz-Steuerventil 11 hat, an das zwei Bremszylinder 12 und 13, einen für jedes Rad 8 bzw. 9, angeschlossen sind.

Das elektronische Blockierschutz-Steuergerät 10 hat eine Verbindung 14 zu einem Relais 15, das über einen Schalter 16 an eine Stromquelle 17 anschließbar ist und über eine Leitung 18 das Magnetventil 4 ansteuern kann.

Die Verbindung 14 ist außerdem an ein Relais 19 angeschlossen, das wiederum über die Leitung 20 eine Verbindung zu einem Gaspedal-Überwachungsschalter 21 hält. Bei betätigtem Gaspedal ist dieser Überwachungsschalter geschlossen und stellt dann eine Verbindung zur Masse her.

### Wirkungsweise

Gewöhnlich ist die Differentialsperre 3, 4 nicht eingeschaltet. Bei Stillstand des Fahrzeugs kann die Differentialsperre 3, 4 zum Sperren des Differentials 2 durch Schließen des Schalter 16 durch den Fahrer eingeschaltet werden. Das Magnetventil 4 erhält über das stromlos geschlossene Halterelais 15 und die Leitung 18 Strom. Das Magnetventil 4 schaltet um und läßt Druckluft aus dem Vorratsbehäl ter 5 vor den Kolben 3' der Differentialsperre 3, 4 gelangen. Eine solche fahrerabhängige Zuschaltung der Differentialsperre 3, 4 ist aber nur bei stehendem Fahrzeug möglich.

Bei der Fahrt wird im Falle einer anlaufenden Blockierschutz-Regelung vom Steuergerät 10 Masse auf die Verbindung 14 geschaltet und damit der Stromfluß der mit dem Schalter 16 an das Magnetventil 4 angelegten Spannung durch das Relais 15 unterbrochen. Damit wird die Sperrwirkung der Differentialsperre 3, 4 aufgehoben. Es is nun eine normal ablaufende Blockierschutz-Steuerung über das Drucksteuerventil 11 möglich.

Gleichzeitig mit der Unterbrechung der Sperrwirkung wird über die Verbindung 14 auch das Relais 19 zugeschaltet. Wird vom Fahrer nun das Gaspedal betätigt, bevor die Blockierschutzregelung zu Ende geführt ist, so wird durch den geschlossenen Kontakt 21 über die Leitung 20 und über das zugeschaltete Relais 19 eine Masse zur Verbindung 14 geführt.

Dies bewirkt, daß bei einer auslaufenden Blockierschutzregelung und bereits wieder betätigtem Gaspedal die beiden Relais 15 und 19 auch dann weiter angezogen bleiben, wenn die Blockierschutz-regelung schließlich tatsächlich zu Ende geführt wird. Erst wenn auch das Gaspedal zurückgenommen wird, wird die Masseverbindung durch den Überwachungsschalter 21 unterbrochen. Über die dann abfallenden Relais 15 und 19 kann die Differentialsperre 3, 4 wieder einrasten.

Für die Wiederzuschaltung der Differentialsperre nach einer blockierschutzbedingten Abschaltung muß somit die "Und"-Bedigung erfüllt sein, daß die Blockierschutzregelung zu Ende geführt ist und das Gaspedal nicht betätigt ist.

Damit ist sichergestellt, daß die Wiederzuschaltung ohne Antriebslast erfolgt.

In Erweiterung der erfinderischen Idee ist es auch möglich, die Masseverbindung 14 über das elektronische Steuergerät 10 erst herzustellen, wenn das Steuergerät 10 einen Gleichlauf der überwachten Fahrzeugräder erkennt.

## Patentansprüche

1. Schlupfgeregelte Bremsanlage für Straßenfahrzeuge mit Allradantrieb, die zum Ausgleich der Wegunterschiede der einzelnen Räder mit Aus-gleichsgetrieben ausgerüstet sind, deren Aus-gleichswirkung durch Differentialsperren aufheb-bar oder reduzierbar ist, die beim Auftreten einer Blockierneigung selbsttätig lösbar sind, dadurch gekennzeichnet, daß die Wiedereinschaltung der Differentialsperre (3, 4) automatisch abhängig von entsprechenden, in ein elektronisches Steuergerät (10) eingegebenen Fahrzuständen, wie Stellung des Gaspedals und/oder Blockierschutzschaltung erfolgt.

2. Schlupfgeregelte Bremsanlage nach Anspruch 1, dadurch gekennzeichnet, daß die Differentialsperre (3, 4) ein Magnetveintil (4) und einen Arbeitszylinder (3) zu ihrem Zu- und Abschalten aufweist und daß in einer elektrischen Leitung (18) zum Magnetventil (4) ein Relais (15) angeordnet ist, das mittels einer Massenverbindung (14) an ein elektro-nisches Blockierschutz-Steuergerät (10) ange-schlossen ist.

3. Schlupfgeregelte Bremsanlage nach Ansruch 2, dadurch gekennzeichnet, daß eine weitere Verbindung des Relais (15) über eine Zweigleitung (20) und ein weitere Relais (19) geführt ist.

4. Schlupfgeregelte Bremsanlage nach Anspruch 3, dadurch gekennzeichnet, daß in der Zweigleitung ein Schalter (21) angeordnet ist, der gewöhnlich offen, aber bei betätigem Gaspeal geschlossen ist.

5. Schlupfgeregelte Bremsanlage nach einem der Anspüche 2 bis 4, dadurch gekennzeichnet, daß die Differentialsperre (3, 4) automatisch zuschaltbar ist, wenn das Steuergerät (10) einen Gleichlauf der Fahrzeugräder (8, 9) erkennt.

## Claims

1. Slip-controlled brake installation for road vehicles with all-wheel drive which, for the purpose of compensating the path differences of the individual wheels, are equipped with differentials, the compensating effect of which can be cancelled or reduced by differential locks which are automatically releasable when a tendency to lock up occurs, characterized in that the reconnection of the differential lock (3, 4) is effected automatically as a function of corresponding driving conditions, such as the position of the accelerator pedal and/or anti-lock circuit, input into an electronic control device (10).

2. Slip-controlled brake installation according to Claim 1, characterized in that the differential lock (3, 4) has a solenoid valve (4) and a working cylinder (3) for connecting and disconnecting it and in that arranged in an electric line (18) to the solenoid valve (4) is a relay (15), which is connected to an electronic anti-lock control device (10) by means of an earth connection (14).

3. Slip-controlled brake installation according to Claim 2, characterized in that a further connection of the relay (15) is taken via a branch line (20) and a further relay (19).

4. Slip-controlled brake installation according to Claim 3, characterized in that arranged in the branch line is a switch (21), which is usually open but is closed while the accelerator pedal is actuated.

5. Slip-controlled brake installation according to Claims 2 to 4, characterized in that the differential lock (3, 4) can be automatically connected when the control device (10) detects synchronous running of the vehicle wheels (8, 9).

## Revendications

1. Installation de freinage réglé en glissement pour des véhicules routiers dont toutes les roues sont motrices et qui sont équipés de mécanismes de compensation pour la compensation des différences de courses des différentes roues, mécanismes dont l'effet de compensation est susceptible d'être supprimé ou réduit par des blocages de différentiels, qui sont susceptibles d'être supprimés automatiquement lors de l'apparition d'une tendance au blocage, installation de freinage caractérisée en ce que la remise en service du blocage (3, 4) du différentiel, s'effectue automatiquement en fonction d'états de marche appropriés introduits dans un appareil électronique de commande (10), tels que la position de la pédale d'accélérateur et/ou du circuit de propulsion contre le blocage.

2. Installation de freinage réglée en glissement selon la revendication 1, caractérisée en ce que le blocage (3, 4) du différentiel comporte une vanne électromagnétique (4) et un cylindre de service (3) pour la mise en service et hors service de ce blocage et que sur une liaison électrique (18) aboutissant à la vanne électromagnétique (4) est disposé un relais (15) qui est raccordé à un appareil électronique de commande (10) du dispositif anti-blocage par une liaison à la masse (14).

3. Installation de freinage réglée en glissement selon la revendication 2, caractérisée en ce qu'une autre liaison du relais (15) est réalisée par l'intermédiaire d'une liaison dérivée (20) et d'un autre relais (19).

4. Installation de freinage réglée en glissement selon la revendication 3, caractérisée en ce que sur la liaison dérivée, est disposé un commutateur lorsque la pédale d'accélérateur est actionnée.

5. Installation de freinage réglée en glissement selon une des revendications 2 à 6, caractérisée en ce que le blocage (3, 4) du différentiel est susceptible d'être automatiquement mis en service lorsque l'appareil de commande (10) détecte un synchronisme des roues (8, 9) du véhicule.